# EUROPEAN PATENT APPLICATION

(11) **EP 3 107 056 A1**
(43) Date of publication of application: **21.12.2016**
(21) Application number: 14882111.9
(22) Date of filing: 07.11.2014
(51) Int. Cl.: G06Q 30/02

(54) **MATCHING SYSTEM, MATCHING METHOD, AND NON-TRANSITORY COMPUTER-READABLE MEDIUM ON WHICH PROGRAM IS STORED**

(30) Priority: 10.02.2014 JP 2014023628
(71) Applicant: NEC Corporation, Tokyo 108-8001 (JP)
(72) Inventor: HIRATA, Kazuya, Tokyo 108-8001 (JP); KAWACHI, Akio, Tokyo 108-8001 (JP); KONDOU, Naoya, Tokyo 136-8627 (JP)
(74) Representative: Betten & Resch
(86) International application number: PCT/JP2014/005616
(87) International publication number: WO 2015/118587

(57) **Abstract**

Provided are a matching system, a matching method, and a program that can make offerings in different services. A matching system (100) includes a matching rule generation engine (4) and an offer engine (6). The matching rule generation engine (4) generates a matching rule that associates a first user belonging to a first service with a second user belonging to a second service. The offer engine (6) offers the first user a commercial material of the second service that can be offered to the second user according to the matching rule.

## Description

### Technical Field

The present invention relates to a matching system, a matching method, and a program, and to, for example, an offering technique in different services.

### Background Art

An information service called offering or recommend (hereinafter merely referred to as offering) has been widely put into practice. Offering is a service that analyzes a person to whom information will be provided and provides information that matches the person according to a result of the analysis. In a typical offering service, a behavioral history of a user on a certain website is analyzed, preferences of the user are assumed, and an advertisement containing contents such as products, services, and the like (hereinafter referred to as commercial materials) that match the preferences are displayed on the website in order to offer the user the commercial materials.

For example, Patent Literature 1 discloses an advertisement information distribution method that is characterized in analyzing tastes of members, categorizing the members and advertisement information according to the tastes, distributing the advertisement information that corresponds to the same taste as that of the member to the user, and the like.

### Citation List

### Patent Literature

Japanese Unexamined Patent Application Publication No. 2002-049832

### Summary of Invention

### Technical Problem

There are various other methods for offering commercial materials than the method disclosed in Patent Literature 1. For example, when commercial materials that are often purchased at the same time are identified, and when one of the commercial materials is purchased, another one of the commercial materials can be offered. Moreover, purchasing trends of a user may be analyzed, a commercial material(s) the user may purchase may be assumed, and the commercial material(s) may be offered.

Recently, as a result of a corporate acquisition or the like, one corporation often develops a plurality of various services. In such a case, there is a need for offering a user of one service of the plurality of services commercial materials of other services of the plurality of services. That is, reciprocal customer transfer between different services is desired.

However, in most cases, information related to the users and commercial materials included in each of different services is managed separately with regard to each of the services. In such a case, in order to appropriately associate information of users and commercial materials included in one service with information of users and commercial materials included in another service, it has been considered that a long time and a high expenditure along with special knowledge of a service operator are required. This has been a big problem, especially in different categories (e.g., different businesses and the like). It is difficult to employ, for example, a method for offering commercial materials that are often purchased at the same time in services of different businesses. This is because such a situation rarely occurs in different businesses, and thus it is difficult to collect on which to base such a method. Further, user's purchase trends and taste are often analyzed from different viewpoints in different businesses, and thus a result of the analysis in one service is of limited use in another service.

That is, conventional offering methods including the method disclosed in Patent Literature 1 have a problem that it is difficult to offer commercial materials in one service to a user in another service, especially in different categories (different businesses).

The present invention has been made to solve such a problem, and an object of the present invention is to provide a matching system, a matching method, and a program that can make offerings in different services.

Other problems of the related art and new features of the present invention will become apparent from the following descriptions of the specification and attached drawings.

### Solution to Problem

A matching system according to the present invention includes: a matching rule generation engine that generates a matching rule for associating a first user belonging to a first service with a second user belonging to a second service; and an offer engine that offers the first user a commercial material of the second service that can be offered to the second user according to the matching rule.

A matching method according to the present invention includes: a matching rule generation step for generating a matching rule that associates a first user belonging to a first service with a second user belonging to a second service; and an offer step for offering the first user a commercial material of the second service that can be offered to the second user according to the matching rule.

A program according to the present invention causes a computer to execute: a matching rule generation step for generating a matching rule that associates a first user belonging to a first service with a second user belonging to a second service; and an offer step for offering the first user a commercial material of the second service that can be offered to the second user according to the matching rule.

### Advantageous Effects of Invention

According to the present invention, it is possible to provide a matching system, a matching method, and a program that can make offerings in different services.

### Brief Description of Drawings

Fig. 1 is a drawing showing a configuration of a matching system 100 according to an exemplary embodiment of the present invention;
Fig. 2 is a drawing showing an operation of the matching system 100 according to the exemplary embodiment of the present invention;
Fig. 3 is a drawing showing examples of product information storage units 11 and 21 according to the exemplary embodiment of the present invention;
Fig. 4 is a drawing showing examples of processes by user information storage units 12 and 22 according to a second exemplary embodiment of the present invention;
Fig. 5 is a drawing showing examples of product models of model information 31 and 32 according to the exemplary embodiment of the present invention;
Fig. 6 is a drawing showing examples of processes of user models of model information 31 and 32 according to the second exemplary embodiment of the present invention; and
Fig. 7 is a drawing showing examples of processes by the matching rule storage unit 5 according to the second exemplary embodiment of the present invention.

### Description of Embodiments

Hereinafter, specific exemplary embodiments incorporating the present invention will be described in detail with reference to the drawings.

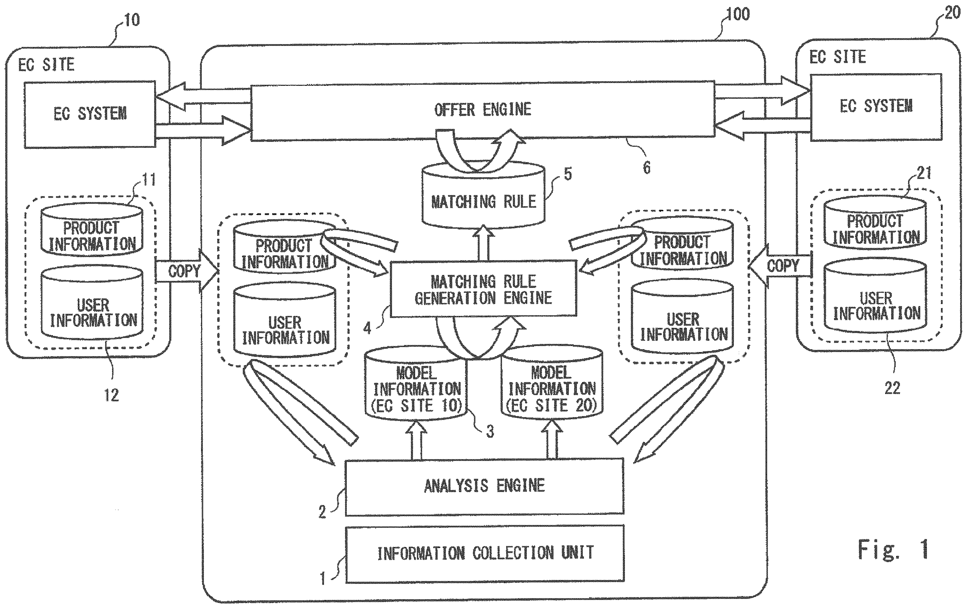

Firstly, a configuration of a matching system 100 according to a first exemplary embodiment of the present invention will be described by referring to Fig. 1.

The matching system 100 according to this exemplary embodiment is communicatively connected to a plurality of services, for example, to EC (Electronic Commerce) sites, and reciprocal customer transfer is performed between these services. In the following description, as the simplest example, the present invention will be described using an example of reciprocal customer transfer between two different services (EC sites 10 and 20). However, the present invention is not limited to two different services and can be applied to reciprocal customer transfer between any number of a plurality of services.

All of the EC sites 10 and 20 and the matching service 100 may be operated by the same operating body or they may be operated by operating bodies that are different from each other.

The matching system 100 includes an information collection unit 1, an analysis engine 2, a model information storage unit 3, a matching rule generation engine 4, a matching rule storage unit 5, and an offer engine 6.

The information collection unit 1 performs processes of obtaining contents of product information storage units 11 and 21 and user information storage units 12 and 22 that are held respectively by the plurality of services (the EC systems 10 and 20) and saving them in a storage region (not shown) in the matching system 100.

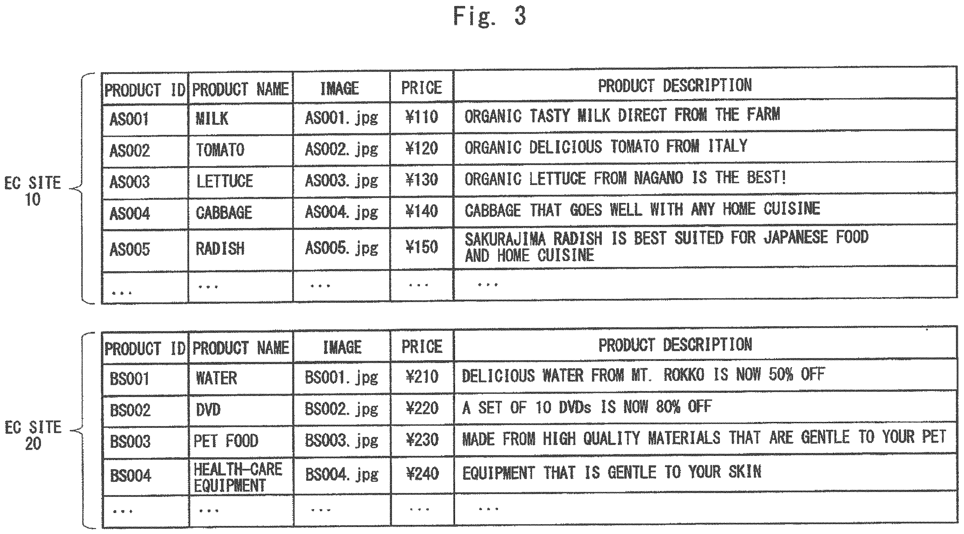

Fig. 3 shows examples of product information 11 and 21. The product information stores information related to commercial materials handled by the services. In this example, product names, product images, prices of products, and texts of product descriptions of products handled by the EC systems 10 and 20 are respectively associated with unique product IDs and stored.

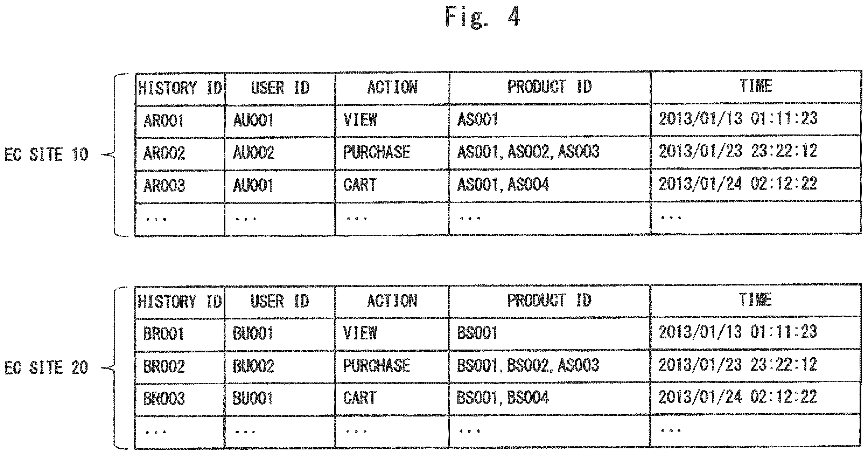

Fig. 4 shows examples of user information 12 and 22. The user information stores information related to a behavior (browsing) history, a purchase history, and the like of the user in the service. In this example, information of a user ID, an action, a product ID and a time is associated with a unique history ID. Actions "view", "purchase", or "cart", respectively, indicate that a user identified by the "user ID" viewed a product page of the "product ID", purchased the product, or added the product to a cart in a time period recorded in the "time".

The analysis engine 2 performs processes of referring to the contents of the product information storage units 11 and 21 and the user information storage units 12 and 22, modeling the product information and user tastes, and generating product models and user models. As a modelling (segmenting) process can be performed using known techniques, for example, the ones disclosed in Patent Application Nos. 2013-260206 and 2013-015016, detailed descriptions thereof will be omitted. Modelled product information and modelled user information in the EC systems 10 and 20 shall be referred to as model information 31 and 32, respectively. The analysis engine 2 stores the model information 31 and 32 in the model information storage unit 3.

The model information storage unit 3 is a storage unit that stores the model information 31 and 32. The model information storage unit 3 is typically a database. Contents of the model information storage unit 3 are used by the matching rule generation engine 4.

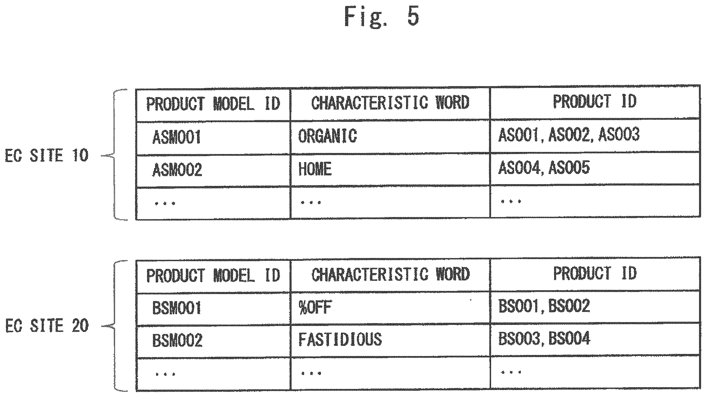

Fig. 5 shows examples of the product models. In this example, the "product ID(s)" of one or more products that have a common "characteristic word" among a plurality of "characteristic words" is associated with a unique "product model ID". A product group identified by the "product model ID" is referred to as a product model. Typically, the analysis engine 2 summarizes products including a particular "characteristic word" in their product names, product descriptions, or the like, and generates one product model. That is, the analysis engine 2 refers to the product information 11 and 21 and applies, for example, a morphological analysis to text information such as a description and the like of the product(s) associated with the product ID(s) in order to extract words such as a noun and the like included in the text information as the characteristic word(s). Further, a word(s) that appears together with the extracted characteristic word is extracted as a co-occurrence word(s), and the characteristic word(s) and the co-occurrence word(s) are managed as one aggregate (topic). The topic here is a concept that represents a meaning common to the characteristic word(s) and the common word(s) (e.g., a collection of words such as a bat, a ball, a home run, and the like have a common meaning (topic) of baseball. As in this example, note that the topic does not appear in the text as it is). The analysis engine 2 executes the above processes on a plurality of product IDs and extracts a plurality of topics. Note that as a plurality of topics are generated, it is common to limit the maximum number of the topics according to the number of product IDs or the like.

Next, the analysis engine 2 calculates topics that constitute the text information such as a description of each product. As a result, a constitution rate of the topic is calculated for each product ID. After that, the analysis engine 2 groups the product IDs that have similar topics and constitution rates in order to generate the product model. At this time, the analysis engine 2 assigns a product model ID to each product model. See Patent Application Nos. 2013-260206 and 2013-015016 for a specific procedure for the generation of the product models.

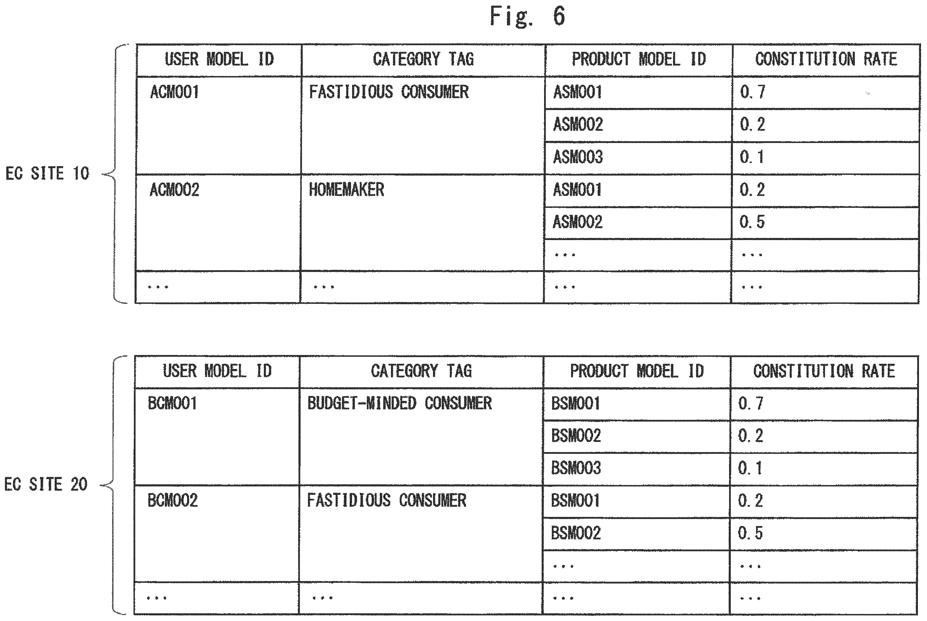

Fig. 6 shows examples of user models. The user model is a data set indicating a portrait of the user regarding the products the user prefers. In this example, the "product model IDs" and the "constitution rates" are associated with a unique "user model ID". That is, the user model represents the portrait of the user by the "product model IDs" and their "constitution rates". The user model can be generated, for example, in the following manner.

Firstly, the analysis engine 2 refers to the user information 12 and 22 and searches for the above "product model ID" that is associated with the plurality of products that have been, for example, viewed by the user. That is, the product model is reversely looked up from the products that have been, for example, viewed by the user. Next, the analysis engine 2 calculates the product models that constitute the product that has been, for example, viewed by the user. As a result, the constitution rates of the product models are calculated for each user. After that, the analysis engine 2 groups the users that have similar product models and constitution rates of the product models in order to generate a user model. At this time, the analysis engine 2 assigns a user model ID to each user model.

Note that modeled information can be, for example, manually provided with an arbitrary tag. In this example, tags such as "fastidious consumer", "homemaker", and the like are provided to the respective user models. Note that tagging is not necessary, and tags may be mainly provided to enable an operator to easily manage the model information.

Note that the above methods for generating the product models and user models are merely examples. Other arbitrary methods may be employed as long as they can create products models and user models that summarize products having similarities based on descriptions and the like of the products.

The matching rule generation engine 4 refers to the model information 31 and 32 stored in the model information storage unit 3 and generates matching rules. The matching rules are information that associates the user models in different services. The matching rule generation engine 4 stores the generated matching rules in the matching rule storage unit 5.

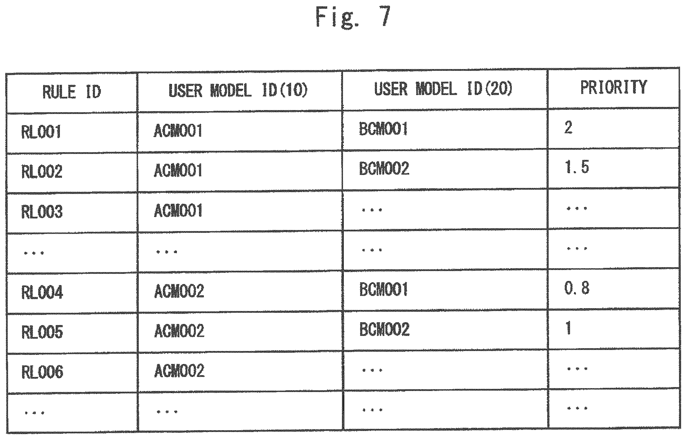

Fig. 7 shows examples of the matching rules. In this example, the user model in the EC system 10 and the user model in the EC system 20 are associated with a unique "rule ID". Further, numerical values are defined as "priorities" for the respective "rule IDs". In this exemplary embodiment, the greater the numerical value, the higher the priority.

The matching rule storage unit 5 is a storage unit that stores the matching rules and is typically a database. The matching rule storage unit 5 may be a file(s) instead of a database depending on a size of a system.

The offer engine 6 is a processing unit that refers to the matching rules in the matching rule storage unit 5 and makes an offering to the user.

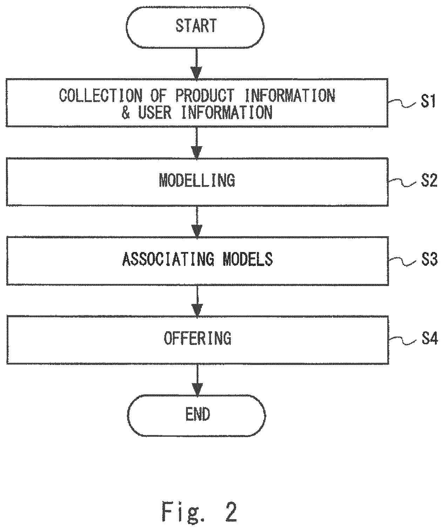

Next, an operation of the matching system 100 according to the exemplary embodiment of the present invention will be described by referring to a flowchart of Fig. 2.

### S1: Collection of product information and user information

The information collection unit 1 collects the product information and user information from the plurality of services connected to the matching system 100, which are the EC systems 10 and 20. To be more specific, the information collection unit 1 refers to the contents of the product information storage units 11 and 21 and the user information storage units 12 and 22 that are held in the EC systems 10 and 20 and copies the contents in a storage region (not shown) in the matching system 100.

### S2: Modelling

The analysis engine 2 models the user information and product information collected in S1. Note that the modelling process can be performed using an existing technique. The analysis engine 2 stores the model information 31 and 32, which is modelled product information and user information in the EC systems 10 and 20, in the model information storage unit 3.

### S3: Associating models

The matching rule generation engine 4 generates the matching rules that associate the user models generated for the respective services. For example, the matching rule generation engine 4 generates patterns for all combinations of the user models in the EC systems 10 and 20. Further, the matching rule generation engine 4 provides arbitrary priorities to the respective combinations (the rule IDs). An initial value may be set to the priorities by a service operator. In this case, in an offer step in S4, which will be described later, it is preferable to perform a process to appropriately change the priorities in order to optimize the matching rules.

Note that the matching rules can be generated and adjusted according to the knowledge of the service operator.

### S4: Offering

The offer engine 6 offers a user who is using a certain service commercial materials of another service. To be more specific, firstly, the offer engine 6 identifies a user model a of a user who is using a service A. Next, the offer engine 6 refers to the matching rule storage unit 5 and extracts a user model b of another service B that is associated with the user model a. Note that when a plurality of other user models are associated with the user model a, the offer engine 6 selects a rule ID having the highest priority so that the user model to be extracted can be determined. Then, the offer engine 6 refers to the model information storage unit 3 and obtains a commercial material(s) of the other service B that is associated with the extracted user model b of the other service B. Lastly, the offer engine 6 offers the user of the service A information related to the obtained commercial material(s) of the other service B.

Preferably, the offer engine 6 optimizes the matching rule preferably according to a reaction of the user to the executed offer. That is, the offer engine 6 detects that an advertisement displayed on the EC site by the offering has been clicked by the user, for example, using various known methods. Next, the offer engine 6 refers to the matching rule storage unit 5 and increases the priority of the rule ID that has been employed to execute the offering. Thus, the priority of the rule ID that achieves a fast response from the user is relatively high, while the priority of the rule ID that achieves a slow response from the user is relatively low. That is, the matching rules are automatically optimized to become more effective rules.

Specific examples of the offerings made by the offer engine 6 will be described in more detail below. In this example, the offer engine 6 offers a user who visited the EC site 10 the products on the EC site 20.
(1) The user visits the EC site 10 and views a webpage of a product ID "AS001".
(2) The EC system 10 notifies the offer engine 6 of the matching system 100 of the product ID "AS001". Alternatively, the offer engine 6 may refer to the user information storage unit 12 and obtain a product ID that has been, for example, viewed by the user. The offer engine 6 refers to product model information (Fig. 5) of the model information 31 and identifies a product model "ASM001" that is associated with the product ID "AS001".
(3) The offer engine 6 refers to user model information (Fig. 6) of the model information 31 and extracts a user model(s) that is associated with the product model "ASM001". When there are a plurality of user models associated with the product model "ASM001", the offer engine 6 extracts one user model having the highest constitution rate of the product model. In this example, the number of the user models associated with the product model "ASM001" is two, which are "ACM001" and "ACM002". As the constitution rate of the product model "ASM001" for the user model "ACM001" is 0.7, and the constitution rate of the product model "ASM001" for the user model "ACM002" is 0.2, the offer engine 6 selects the user model "ACM001" that has the highest constitution rate of the product model.
(4) The offer engine 6 refers to the matching rule storage unit 5 and extracts a matching rule(s) associated with the selected user model "ACM001". When there are a plurality of rules associated with the user model "ACM001", the offer engine 6 extracts one rule having the highest priority. In this example, the number of the rules associated with the user model "ACM001" is three, which are rule IDs "RL001", "RL002", and "RL003". The rule having the highest priority among these rules is "RL001". The offer engine 6 identifies a user model "BCM001" of the EC site 20 that is associated with the user model "ACM001" for the rule ID "RL001".
(5) The offer engine 6 refers to user model information (Fig. 6) of the model information 32 and identifies a product model "BSM001" having the highest constitution rate among the product models associated with the user model "BCM001".
(6) The offer engine 6 refers to product model information (Fig. 5) of the model information 32 and identifies products that are associated with the product model "BSM001" as products to be offered. In this example, the offer engine 6 offers a user of the EC system 10 products IDs "BS001" and "BS002" of the EC system 20. Typically, a banner advertisement and the like related to the product IDs "BS001" and "BS002" are displayed on a page the user is viewing in the EC system 10.

According to this exemplary embodiment, the analysis engine 2 models users in the respective services, and the matching rule generation engine 4 associates the generated user models. Further, the analysis engine 2 associates product model commercial materials that match the user model. Thus, commercial materials can be offered to suit the user's taste in different services. In addition, an effect in which an amount spent by an average customer increases can be expected.

Further, according to this exemplary embodiment, the offer engine 6 optimizes the matching rules. Thus, it is possible to make more effective offerings according to the matching rules. Moreover, it becomes possible to understand a correlation relationship between not only user models in one's own company but also user models in different services. It is thus possible to collect information that can be used as a foundation for new services, a campaign policy, and the like

Additionally, according to this exemplary embodiment, although the matching generated in the matching rule generation step is a hypothesis at the time of its generation, the hypothesis can be evaluated and proved by the offerings that will be made afterward. It is therefore possible to accumulate knowledge on how successful the matching of the users and products is in different businesses; that is, it is possible to accumulate marketing information.

### Other Exemplary Embodiments

Note that the present invention is not limited to the above exemplary embodiments, and modifications can be made as appropriate without departing from the scope of the invention. For example, in the above exemplary embodiments, although the present invention has been described as being mainly a hardware configuration, it is not limited to this, and the present invention can be achieved by causing a CPU (Central Processing Unit) to execute arbitrary processes by a computer program. In this case, the computer program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

The present invention can be described as, but not limited to, the following supplementary notes.

### (Supplementary note 1)

A matching system comprising:
a matching rule generation engine that generates a matching rule, the matching rule associating a first user belonging to a first service with a second user belonging to a second service; and
an offer engine that offers the first user a commercial material of the second service that can be offered to the second user according to the matching rule.

### (Supplementary note 2)

The matching system according to Supplementary note 1, further comprising a storage unit that associates the second user with the commercial material of the second service, wherein the offer engine refers to the storage unit and offers the first user the commercial material of the second service associated with the second user.

### (Supplementary note 3)

The matching system according to Supplementary note 1 or 2, wherein
the matching rule generation engine generates the matching rule that exhaustively associates the first user with a plurality of the second users and extracts a combination of the first user and a particular one of the second users from the matching rule according to a predetermined extraction condition, and
the offer engine offers the first user the commercial material of the second service that can be offered to the extracted second user.

### (Supplementary note 4)

The matching system according to Supplementary note 3, wherein the offer engine changes the extraction condition according to a reaction of the first user to the offer.

### (Supplementary note 5)

The matching system according to any one of Supplementary notes 1 to 4, wherein the matching rule generation engine generates the matching rule that associates a first user model corresponding to the first user with a second user model corresponding to the second user.

### (Supplementary note 6)

The matching system according to Supplementary note 5, further comprising a second storage unit that associates the second user model corresponding to the second user with a second product model corresponding to the commercial material of the second service, wherein the offer engine refers to the second storage unit and offers the first user the commercial material of the second service corresponding to the second product model associated with the second user model.

### (Supplementary note 7)

A matching method comprising:
a matching rule generation step for generating a matching rule, the matching rule associating a first user belonging to a first service with a second user belonging to a second service; and
an offer step for offering the first user a commercial material of the second service that can be offered to the second user according to the matching rule.

### (Supplementary note 8)

The matching method according to Supplementary note 7, wherein in the offer step, a storage unit that associates the second user with the commercial material of the second service is referred to, and the commercial material of the second service associated with the second user is offered to the first user.

### (Supplementary note 9)

The matching method according to Supplementary note 7 or 8, wherein
in the matching rule generation step, the matching rule that exhaustively associates the first user with a plurality of the second users is generated,
a combination of the first user and a particular one of the plurality of second users is extracted from the matching rule according to a predetermined extraction condition, and
in the offer step, the commercial material of the second service that can be offered to the extracted second user is offered to the first user.

### (Supplementary note 10)

The matching method according to Supplementary note 9, wherein the extraction condition is changed according to a reaction of the first user to the offer.

### (Supplementary note 11)

The matching system according to any one of Supplementary notes 7 to 11, wherein in the matching rule generation step, the matching rule that associates a first user model corresponding to the first user with a second user model corresponding to the second user is generated.

### (Supplementary note 12)

The matching system according to Supplementary note 11, wherein in the offer step, a second storage unit that associates the second user model corresponding to the second user with a second product model corresponding to the commercial material of the second service is referred to, and the commercial material of the second service corresponding to the second product model associated with the second user model is offered to the first user.

### (Supplementary note 13)

A program that causes a computer to execute:
a matching rule generation step for generating a matching rule, the matching rule associating a first user belonging to a first service with a second user belonging to a second service; and
an offer step for offering the first user a commercial material of the second service that can be offered to the second user according to the matching rule.

Although the present invention has been described with reference to the exemplary embodiments, the present invention is not limited by the above. Various modifications, obvious to those skilled in the art, can be made to the configurations and details of the present invention.

The present application claims priority rights of and is based on Japanese Patent Application No. 2014-023628 filed on February 10, 2014 in the Japanese Patent Office, the entire contents of which are hereby incorporated by reference.

### Reference Signs List

- 100: MATCHING SYSTEM
- 1: INFORMATION COLLECTION UNIT
- 2: ANALYSIS ENGINE
- 3: MODEL INFORMATION STORAGE UNIT
- 31: MODEL INFORMATION
- 32: MODEL INFORMATION
- 4: MATCHING RULE GENERATION ENGINE
- 5: MATCHING RULE STORAGE UNIT
- 6: OFFER ENGINE
- 10: EC SYSTEM
- 11: PRODUCT INFORMATION STORAGE UNIT
- 12: USER INFORMATION STORAGE UNIT
- 20: EC SYSTEM
- 21: PRODUCT INFORMATION STORAGE UNIT
- 22: USER INFORMATION STORAGE UNIT

## Claims

1. A matching system comprising:
a matching rule generation engine that generates a matching rule, the matching rule associating a first user belonging to a first service with a second user belonging to a second service; and
an offer engine that offers the first user a commercial material of the second service that can be offered to the second user according to the matching rule.

2. The matching system according to Claim 1, further comprising storage means for associating the second user with the commercial material of the second service, wherein the offer engine refers to the storage means and offers the first user the commercial material of the second service associated with the second user.

3. The matching system according to Claim 1 or 2, wherein
the matching rule generation engine generates the matching rule that exhaustively associates the first user with a plurality of the second users and extracts a combination of the first user and a particular one of the second users from the matching rule according to a predetermined extraction condition, and
the offer engine offers the first user the commercial material of the second service that can be offered to the extracted second user.

4. The matching system according to Claim 3, wherein the offer engine changes the extraction condition according to a reaction of the first user to the offer.

5. The matching system according to any one of Claims 1 to 4, wherein the matching rule generation engine generates the matching rule that associates a first user model corresponding to the first user with a second user model corresponding to the second user.

6. The matching system according to Claim 5, further comprising second storage means for associating the second user model corresponding to the second user with a second product model corresponding to the commercial material of the second service, wherein the offer engine refers to the second storage means and offers the first user the commercial material of the second service corresponding to the second product model associated with the second user model.

7. A matching method comprising:
a matching rule generation step for generating a matching rule, the matching rule associating a first user belonging to a first service with a second user belonging to a second service; and
an offer step for offering the first user a commercial material of the second service that can be offered to the second user according to the matching rule.

8. The matching method according to Claim 7, wherein in the offer step, storage means that associates the second user with the commercial material of the second service is referred to, and the commercial material of the second service associated with the second user is offered to the first user.

9. The matching method according to Claim 7 or 8, wherein
in the matching rule generation step, the matching rule that exhaustively associates the first user with a plurality of the second users is generated,
a combination of the first user and a particular one of the plurality of second users is extracted from the matching rule according to a predetermined extraction condition, and
in the offer step, the commercial material of the second service that can be offered to the extracted second user is offered to the first user.

10. A non-transitory computer readable medium storing a program that causes a computer to execute:
a matching rule generation step for generating a matching rule, the matching rule associating a first user belonging to a first service with a second user belonging to a second service; and
an offer step for offering the first user a commercial material of the second service that can be offered to the second user according to the matching rule.
